# EUROPÄISCHE PATENTANMELDUNG

(11) **EP 4 180 473 A1**
(43) Veröffentlichungstag der Anmeldung: **17.05.2023**
(21) Anmeldenummer: 21207517.0
(22) Anmeldetag: 10.11.2021
(51) Int. Cl.: C08G 18/02, C08G 18/79, C08G 18/42, C08G 18/48, C08G 18/24, C08G 18/18, C08G 18/16, C08G 18/76, C08L 79/00, B01J 27/16

(54) **VERFAHREN ZUR HERSTELLUNG VON AROMATISCHEN POLYMEREN CARBODIIMIDEN**

(71) Anmelder: LANXESS Deutschland GmbH, 50569 Köln (DE)
(72) Erfinder: LAUFER, Wilhelm, 67158 Ellerstadt (DE)

(57) **Zusammenfassung**

Die vorliegende Erfindung betrifft ein Verfahren zur Herstellung von aromatischen polymeren Carbodiimiden, die dadurch erhältlichen aromatisch polymere Carbodiimide sowie deren Verwendung als Hydrolyseschutzmittel.

## Beschreibung

Die vorliegende Erfindung betrifft Verfahren zur Herstellung von aromatischen polymeren Carbodiimiden, die über diese Verfahren hergestellten aromatischen polymeren Carbodiimide sowie deren Verwendung als Hydrolyseschutzmittel in Polyurethan (PU)-enthaltenden Zusammensetzungen, vorzugsweise thermoplastischem TPU, PU-Klebstoffen, PU-Gießharzen, PU-Elastomeren oder PU-Schäumen

Carbodiimide haben sich in vielen Anwendungen bewährt, z.B. als Hydrolyseschutzmittel für thermoplastische Kunststoffe, Ester-basierte Polyole, Polyurethane, Triglyceride und Schmierstofföle etc.

Die Synthese der Carbodiimide erfolgt nach dem Stand der Technik ausgehend von Isocyanaten, die durch basische oder heterocyclische Katalyse unter CO₂-Abspaltung carbodiimidisiert werden. Dabei können mono- oder polyfunktionelle Isocyanate zu monomeren oder polymeren Carbodiimiden umgesetzt werden. Der Begriff "polymer" ist im Sinne der vorliegenden Erfindung weit zu interpretieren, d.h. sehr kurze Polymere wie z.B. Oligomere fallen ebenfalls darunter.

Die üblicherweise verwendeten Katalysatoren sind Alkali- oder Erdalkaliverbindungen, wie z.B. Alkalialkoholate sowie heterocyclische Verbindungen, die Phosphor enthalten, wie z.B. in Angew. Chem. 1962, 74, 801-806 und Angew. Chem. 1981, 93, 855-866 beschrieben.

Die Herstellung von sterisch gehinderten polymeren Carbodiimiden nach dem Stand der Technik gelingt sehr gut mit Hilfe von Phosphor-haltigen Katalysatoren, z. B. Phospholenen. Die vollständige Entfernung dieser Phosphor-haltigen Katalysatoren ist jedoch, wie in EP 2897996 B1 beschrieben, nur unter Verwendung von aufwendigen Prozessen mit mehreren Destillationsschritten möglich. Da Carbodiimide vorzugsweise bei der Herstellung von Polyurethanen eingesetzt werden, ist die Anwesenheit von Phosphor-Katalysatoren, selbst im Spurenbereich, extrem störend und ist daher zu vermeiden.

Weitere Verfahren aus dem Stand der Technik wie in EP3307709 B1 beschrieben, verwenden Phosphor-freie Katalysatoren. Sowohl die oben beschriebene mehrfache Destillation als auch die Verwendung Phosphor-freier Katalysatoren haben jedoch den Nachteil, dass sie zu dunklen oder verfärbten Carbodiimiden führen. In vielen Polyurethan-Anwendungen spielt die Farbe eine zentrale Rolle z. B. für transparente, farblose oder hell gefärbte Teile.

Der Ausdruck aromatische Carbodiimide ist im Sinne der vorliegenden Erfindung so auszulegen, dass damit Carbodiimide gemeint sind, bei denen die Carbodiimidfunktion direkt an die aromatische Gruppe gebunden ist.

Aufgabe der vorliegenden Erfindung war es daher, ein verbessertes Verfahren bereitzustellen, welches die wirtschaftliche Herstellung von polymeren aromatischen Carbodiimiden ermöglicht und welches polymere aromatische Carbodiimide bereitstellt, die praktisch frei von organischen Phosphorverbindungen sind und eine niedrige Farbzahl von weniger als 50, vorzugsweise weniger als 35, besonders bevorzugt weniger als 25 und meist bevorzugt weniger als 15 ermittelt als b-Wert nach der CIE L*a*b*-Methode gemäß ISO 11664-4 aufweisen, so dass diese bei der Herstellung und/oder Stabilisierung von farbechten PU-Systemen eingesetzt werden können.

Überraschenderweise wurde nun gefunden, dass die vorgenannten Aufgaben erfüllt sind, wenn aromatische Diisocyanate in Gegenwart mindestens eines Phosphor-haltigen Katalysators in sehr geringen Konzentrationen bei Temperaturen von 120 bis 220° C, vorzugsweise von 160 bis 200°C, ganz besonders bevorzugt 180 bis 200°C umgesetzt (carbodiimidisiert) werden. Gegenstand der vorliegenden Erfindung ist daher ein Verfahren zur Herstellung von polymeren aromatischen Carbodiimiden der Formel (I)

R⁴-R⁸-(-N=C=N-R⁸-)ₘ-R⁴ (I),

wobei
   - m: einer ganzen Zahl von 2 bis 500, bevorzugt 3 bis 20, ganz besonders bevorzugt 4 bis 10 entspricht,
   - R⁸: für C₁-C₁₂-Alkyl- substituierte Arylene, C₇-C₁₈-Alkylaryl-substituierte Arylene oder C₁-C₁₂-Alkyl- substituierte über Alkylengruppen verbrückte Arylene steht, wobei die genannten Arylene jeweils mit mindestens 2 der vorgenannten Alkyl- und/oder Alkylarylresten substituiert sind, unter der Maßgabe, dass R⁸ insgesamt 9 bis 30 Kohlenstoffatome aufweist, und
   - R⁴: -NCO, -NCNR⁵, -NHCONHR⁵, -NHCONR⁵R⁶ oder -NHCOOR⁷ ist,
wobei R⁵ und R⁶ gleich oder verschieden sind und einen C₁-C₁₂-Alkyl-, C₆-C₁₂-Cycloalkyl-, C₇-C₁₈-Aralkyl- oder Arylrest darstellen und R⁷ einem C₁-C₂₂-Alkyl-, C₆-C₁₂-Cycloalkyl-, C₆-C₁₈-Aryl- oder C₇-C₁₈-Aralkylrest, einem ungesättigten C₂-C₂₂-Alkylrest oder einem Alkoxypolyoxyalkylenrest entspricht,
durch Carbodiimidisierung aromatischer Diisocyanate bei Temperaturen von 120 bis 220°C, vorzugsweise 160 bis 200°C in Gegenwart mindestens eines Phosphor-haltigen Katalysators in einer Konzentration von 15 - 40 ppm, bevorzugt von 20 - 30 ppm massenbezogen auf die aromatischen Diisocyanate.

Typischerweise weisen die Alkylsubstituenten pro Gruppe R⁸ in Summe von 3 bis 24 Kohlenstoffatome auf. Bevorzugt weisen die Alkylsubstituenten pro Gruppe R⁸ in Summe von 4 bis 24 Kohlenstoffatome auf, unter der Maßgabe, dass R⁸ insgesamt 10 bis 30 Kohlenstoffatome aufweist. Meist bevorzugt weisen die Alkylsubstituenten pro Gruppe R⁸ in Summe von 6 bis 18 Kohlenstoffatome auf, unter der Maßgabe, dass R⁸ insgesamt 12 bis 30 Kohlenstoffatome aufweist.

Bei einer bevorzugten Ausführungsform der Erfindung steht R⁸ für C₁-C₁₂-Alkyl- substituierte Arylene, welche mit mindestens 2 der genannten Alkylresten substituiert sind, unter der Maßgabe, dass R⁸ insgesamt 10 bis 24 Kohlenstoffatome aufweist.

In einer weiteren bevorzugten Ausführungsform der Erfindung steht R⁸ für Diisopropylphenylen und/oder Triisopropylphenylen. Eine besonders bevorzugte Ausführungsform der Erfindung betrifft ein Verfahren zur Herstellung polymerer aromatischer Carbodiimide der Formel (II) 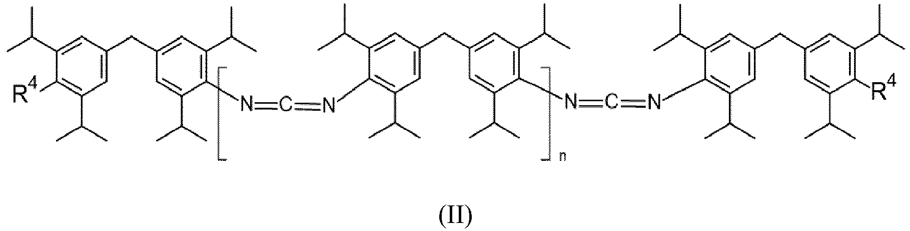 in der
R⁴ die obige Bedeutung hat,
   und
n = 1 bis 20, bevorzugt n = 1 bis 15 ist.

Die für die Carbodiimidisierung einsetzbaren aromatischer Diisocyanate entsprechen der Formel (III), in der R⁸ die oben angegebene Bedeutung hat:

OCN-R⁸-NCO (III),

Die Phosphor-haltigen Katalysatoren im Sinne der Erfindung sind Phospholene oder Phospholidine. Als Phospholene werden bevorzugt Phospholenoxide, besonders bevorzugt Alkylphospholenoxide wie z.B. Methylphospholenoxide und als Phospholidine bevorzugt Phospholidinoxide eingesetzt.

Als Phospholidin kann z.B. 1,3-Dimethyl-2-phenyl-1,3,2-diazaphospholidin-2-oxid (CAS Nr. 6226-05-7) eingesetzt werden

Bevorzugt wird als Carbodiimidisierungskatalysator ein oder mehrere Phospholenoxide eingesetzt, weiter bevorzugt ein oder mehrere Methylphospholenoxide eingesetzt.

Besonders bevorzugt wird als Carbodiimidisierungskatalysator ein Phospholenoxid der allgemeinen Formel (1) oder Doppelbindungsisomere davon eingesetzt, 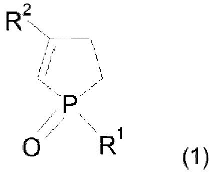 wobei R¹ und R² unabhängig voneinander für H oder einen aliphatischen C₁-C₁₅-Kohlenwasserstoffrest, cycloaliphatischen C₅-C₁₅-Kohlenwasserstoffrest, Aryl-C₆-C₁₅-Kohlenwasserstoffrest, Aralkyl-C₆-C₁₅-Kohlenwasserstoffrest oder Alkaryl-C₆-C₁₅-Kohlenwasserstoffrest stehen.

Vorzugsweise ist R¹ H oder ein aliphatischer C₁-C₁₀-Kohlenwasserstoffrest oder ein Aryl-C₆-C₁₅-Kohlenwasserstoffrest, besonders bevorzugt ein Methyl-, Ethyl- oder Propylrest oder ein Phenyl- oder Benzylrest und meist bevorzugt R¹ ein Methyl- oder Phenylrest.

Vorzugsweise ist R² H oder ein aliphatischer C₁-C₁₀-Kohlenwasserstoffrest, besonders bevorzugt H, oder ein Methyl-, Ethyl- oder Propylrest und meist bevorzugt H oder ein Methylrest.

Besonders bevorzugte Phospholenoxide sind 3-Methyl-1-phenyl-2-phospholen-1-oxid, 1-Phenyl-2-phospholen-1-oxid, 1-Methyl-2-phospholen-1-oxid, 1,3-Dimethyl-2-phospholen-1-oxid, 1-Ethyl-3-methyl-2-phospholen-1-oxid und deren Doppelbindungsisomere 3-Methyl-1-phenyl-3-phospholen-1-oxid, 1-Phenyl-3-phospholen-1-oxid, 1-Methyl-3-phospholen-1-oxid, 1,3-Dimethyl-3-phospholen-1-oxid, 1-Ethyl-3-methyl-3-phospholen-1-oxid

Meist bevorzugt wird als Carbodiimidisierungskatalysator 1-Methyl-2-phospholen-1-oxid (MPO) und/oder dessen Doppelbindungsisomer 1-Methyl-3-phospholen-1-oxid eingesetzt.

In einer weiteren Ausführungsform können zu den Phophor-haltigen Katalysatoren weitere anorganischen oder organischen Verbindungen wie Co-Aktivatoren, Synergisten und/oder Lösemittel- oder zugesetzt werden.

In einer weiteren Ausführungsform können zu den Phophor-haltigen Katalysatoren weitere Phorphor-haltige Verbindungen zugesetzt werden, die kaum oder keine katalytische Wirkung für die Carbodiimidisierung bringen und in PU-Anwendungen auch keine weitere negativen Effekte aufzeigen. Hierzu sind Phosphate, Polyphosphate, monomere oder polymere Phosphorsäureester als mögliche Beispiele zu nennen.

In einer weiteren Ausführungsform können weitere Phasentransfer-Katalysatoren oder - Verbindungen eingesetzt werden. Bevorzugt sind hierfür ionische Flüssigkeiten oder Ether.

Besonders bevorzugte aromatische Diisocyanate, die einzeln oder in Kombination mit anderen aromatischen Diisocyanaten eingesetzt werden, sind Verbindungen der Formel (IV) oder (V)

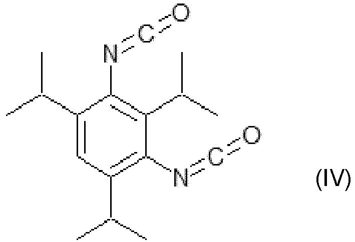

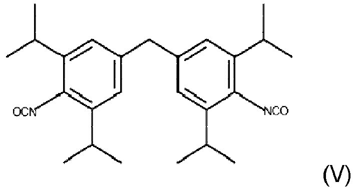

Bei der Verbindung der Formel (IV) handelt es sich um Triisopropylphenyldiisocyanat.

In einer bevorzugten Ausführungsform des erfindungsgemäßen Verfahrens werden die Phosphor-haltigen Katalysatoren im Anschluss an die Carbodiimidisierung durch eine einfache Destillation und/oder ggf. durch Extraktion oder Umkristallisation mittels eines Lösemittels abgetrennt.

Die Carbodiimidisierung kann sowohl in Substanz als auch in einem Lösemittel durchgeführt werden. Als Lösemittel werden vorzugsweise C₇-C₂₂-Alkylbenzole, Paraffinöle, Polyethylenglykoldimethylether, Ketone oder Lactone eingesetzt.

Wenn die Reaktionsmischung den gewünschten Gehalt an NCO-Gruppen, entsprechend einem mittleren Kondensationsgrad von m = 2 bis 500, bevorzugt 3 bis 20, ganz besonders bevorzugt 4 bis 10, besitzt, wird die Carbodiimidisierung vorzugsweise gestoppt.

In einer bevorzugten Herstellungsvariante der erfindungsgemäßen aromatischen polymeren Carbodiimide werden anschließend die überschüssigen Isocyanatmonomere und der Phosphor-haltige Katalysator bei Temperaturen von 150 - 200° C, bevorzugt 160 - 180°C abdestilliert.

In einer weiteren Ausführungsform der vorliegenden Erfindung werden anschließend die freien endständigen Isocyanatgruppen der Carbodiimide mit aliphatischen und/oder aromatischen Aminen, Alkoholen und/oder Alkoxypolyoxyalkylenalkoholen, vorzugsweise in einem geringem Überschuss an -NH-, -NH₂- und/oder -OH-Gruppen, gegebenenfalls in Anwesenheit eines dem Fachmann bekannten Katalysators, vorzugsweise tert. Aminen oder Organozinn-Verbindungen, besonders bevorzugt DBTL (Dibutylzinndilaurat oder DOTL (Dioctylzinndilaurat), abreagiert. Das Stoffmengen-Verhältnis von Aminen, Alkoholen und/oder Alkoxypolyoxyalkylenalkoholen zu polymeren Carbodiimiden der Formel (I) liegt vorzugsweise bei 1,005 - 1,05 : 1, besonders bevorzugt bei 1,01 - 1,03 : 1, bezogen auf die vorhandenen N=C=O-Gruppen.

In einer weiteren Ausführungsform der vorliegenden Erfindung wird zur Unterbrechung der Carbodiimidisierung die Temperatur der Reaktionsmischung auf 50 - 120°C, bevorzugt 60 - 100 °C, besonders bevorzugt auf 80 - 90 °C reduziert und gegebenenfalls nach Zugabe eines Lösemittels, bevorzugt ausgewählt aus der Gruppe der C₇ - C₂₂-Alkyl-benzole, besonders bevorzugt Toluol, werden die freien endständigen Isocyanatgruppen der Carbodiimide mit aliphatischen und/oder aromatischen Aminen, Alkoholen und/oder Alkoxypolyoxyalkylenalkoholen vorzugsweise in einem geringem Überschuss an -NH-, -NH₂- und/oder -OH-Gruppen, gegebenenfalls in Anwesenheit eines dem Fachmann bekannten PU-Katalysators, vorzugsweise tert. Aminen oder Organozinn-Verbindungen, besonders bevorzugt DBTL (Dibutylzinn dilaurat oder DOTL (Dioctylzinndilaurat), abreagiert. Das Stoffmengen-Verhältnis von Aminen, Alkoholen und/oder Alkoxypolyoxyalkylenalkoholen zu den polymeren Carbodiimiden gemäß Formel (I) liegt vorzugsweise bei 1,005 - 1,05 : 1, besonders bevorzugt bei 1,01 - 1,03 : 1, bezogen auf die vorhandenen N=C=O-Gruppen.

In einer weiteren Ausführungsform der Erfindung erfolgt die Herstellung der erfindungsgemäßen polymeren Carbodiimide nach Formel (I) durch eine partielle, vorzugsweise < 50%-ige, bevorzugt < 40 % Endfunktionalisierung der freien NCO-Gruppen in den Isocyanat-Gruppen-enthaltende Verbindungen der Formel (I) mit R⁴ = -NCO mit primären oder sekundären Aminen oder Alkoholen und/oder Alkoxypolyoxyalkylenalkoholen.

Vorzugsweise werden die erfindungsgemäßen Carbodiimide nach ihrer Herstellung gereinigt. Die Reinigung der Rohprodukte kann destillativ und/oder mittels Extraktion mit Lösemitteln erfolgen. Als geeignete Lösemittel für die Aufreinigung können vorzugsweise, C₇ - C₂₂-Alkylbenzole, Paraffinöle, Alkohole, Ketone oder Ester eingesetzt werden. Dabei handelt es sich um handelsübliche Lösemittel.

Ein weiterer Gegenstand der vorliegenden Erfindung sind polymere Carbodiimide gemäß Formel (I) mit einer Farbzahl von weniger als 50, vorzugsweise weniger als 35, besonders bevorzugt weniger als 25 und meist bevorzugt weniger als 15 ermittelt als b-Wert nach der CIE L*a*b*-Methode gemäß ISO 11664-4 und einem Gehalt von maximal 10 ppm, bevorzugt maximal 5 ppm und besonders bevorzugt maximal 1 ppm an den erfindungsgemäßen Phosphor-haltigen Katalysatoren. Diese sind erhältlich durch das erfindungsgemäße Verfahren.

Ein weiterer Gegenstand der vorliegenden Erfindung sind Hydrolysestabilisatoren für Polyurethan, enthaltend mindestens 90% an aromatischen polymeren Carbodiimiden nach Formel (I), mit einem Anteil von maximal 10 ppm, bevorzugt maximal 5 ppm und besonders bevorzugt maximal 1 ppm an den erfindungsgemäßen Phosphor-haltigen Katalysatoren.

Die Stabilisatoren ermöglichen insbesondere einen hervorragenden Hydrolyseschutz.

Ein weiterer Gegenstand der vorliegenden Erfindung sind Verfahren zur Herstellung von Polyurethanen (PU), bevorzugt thermoplastischen Polyurethanen, wobei die Umsetzung der Polyole, vorzugsweise der Polyesterpolyole, mit den Isocyanaten in Gegenwart des erfindungsgemäßen polymeren Carbodiimides durchgeführt wird und/oder die erfindungsgemäßen polymeren Carbodiimide im Anschluss an die Umsetzung zum Polyurethan zugesetzt werden.

In einer weiteren bevorzugten Ausführungsform der Erfindung wird das Verfahren in Anwesenheit von PU-Katalysatoren und Hilf- und oder Zusatzstoffen durchgeführt.

Die Herstellung der Polyurethane erfolgt dabei vorzugsweise, wie in WO 2005/111136 A1 beschrieben.

Polyurethane entstehen durch Polyadditionsreaktion von Polyisocyanaten mit mehrwertigen Alkoholen, den Polyolen, vorzugsweise Polyesterpolyolen, nahezu quantitativ. Die Verknüpfung erfolgt durch die Reaktion einer Isocyanatgruppe (-N=C=O) eines Moleküls mit einer Hydroxygruppe (-OH) eines anderen Moleküls unter Bildung einer Urethangruppe (-NH-CO-O-).

Der Reaktionsverlauf zwischen Diisocyanat und Polyol ist abhängig von dem Molver-hältnis der Komponenten. Zwischenstufen mit gewünschtem Durchschnittsmolekulargewicht und gewünschten Endgruppen können durchaus erhalten werden. Diese Zwischenstufen können dann zu einem späteren Zeitpunkt mit einem Diol oder Diamin umgesetzt (kettenverlängert) werden, wobei dann das gewünschte Polyurethan bzw. Polyurethan-Polyharnstoff-Hybrid gebildet wird. Die Zwischenstufen werden im Allgemeinen als Prepolymer bezeichnet.

Geeignete Polyole für die Herstellung von Prepolymeren sind Polyalkylenglykolether, Polyetherester oder Polyester mit endständigen Hydroxylgruppen (Polyesterpolyole).

Bei den Polyolen im Sinne der Erfindung handelt es sich um Verbindungen, die vorzugsweise ein Molekulargewicht (in g/mol) von bis zu 2000, bevorzugt im Bereich von 500 bis 2000 und besonders bevorzugt im Bereich von 500 bis 1000 aufweisen.

Der Begriff Polyol im Sinne der Erfindung umfasst dabei sowohl Diole als auch Triole, wie auch Verbindungen mit mehr als drei Hydroxylgruppen je Molekül. Die Verwendung von Triolen ist besonders bevorzugt.

Bevorzugte Polyole sind Polyesterpolyole und/oder Polyetheresterpolyole.

Vorteilhaft ist es, wenn das Polyol eine OH-Zahl von bis zu 200, vorzugsweise zwischen 20 und 150 und besonders bevorzugt zwischen 50 und 115, aufweist.

Insbesondere eignen sich Polyesterpolyole, die Reaktionsprodukte von verschiedenen Polyolen mit aromatischen oder aliphatischen Dicarbonsäuren und/oder Polymeren von Lactonen sind.

Bevorzugt hierbei sind aromatische Dicarbonsäuren, welche zur Bildung geeigneter Polyesterpolyole verwendet werden können. Besonders bevorzugt sind hier Terephthalsäure, Isophthalsäure, Phthalsäure, Phthalsäureanhydrid sowie substituierte Dicarbonsäureverbindungen mit Benzolkern.

Als aliphatische Dicarbonsäuren sind solche bevorzugt, welche zur Bildung geeigneter Poylesterpolyole verwendet werden können, besonders bevorzugt Sebacinsäure, Adipinsäure und Glutarsäure.

Als Polymere von Lactonen sind solche bevorzugt, welche zur Bildung geeigneter Poylesterpolyole verwendet werden können, besonders bevorzugt Polycaprolacton.

Sowohl bei den Dicarbonsäuren als auch bei den Polymeren von Lactonen handelt es sich um handelsübliche Substanzen.

Besonders bevorzugt sind auch solche Polyole, welche zur Bildung geeigneter Polyesterpolyole verwendet werden können, ganz besonders bevorzugt Ethylenglykol, Butandiol, Neopentylglykol, Hexandiol, Propylenglykol, Dipropylenglykol, Diethylenglykol und Cyclohexandimethanol.

In einer weiteren bevorzugten Ausführungsform der Erfindung handelt es sich bei den Polyolen um Polyetheresterpolyole.

Hierfür sind die Reaktionsprodukte von verschiedenen vorhergehend genannten Polyolen mit aromatischen oder aliphatischen Dicarbonsäuren und/oder Polymeren von Lactonen (z.B. Polycaprolacton) bevorzugt.

Als Polyole können handelsübliche Verbindungen, beispielsweise die unter dem Handelsnamen Baycoll^{®} oder Desmophen^{®} vertriebenen Produkte der Firma Bayer MaterialScience AG verwendet werden.

Als Diisocyanate sind aromatische und aliphatische Diisocyanate bevorzugt. Besonders bevorzugt sind Toluol-2,4-diisocyanat, Toluol-2,6-diisocyanat, Phenylendiisocyanat, 4,4-Diphenylmethandiisocyanat, Methylen-bis(4-phenylisocynat), Naphtalen-1,5-diisocyanat, Tetramethylen-1,4.diisocyanat und/oder Hexamethylen-1,6-diisocyanat, ganz besonders bevorzugt Toluol-2,4-diisocyanat und Toluol-2,6-diisocyanat.

Als Diisocyanate können handelsübliche Verbindungen, beispielsweise die unter dem Handelsnamen Desmodur^{®} vertriebenen Produkte der Firma Bayer MaterialScience AG verwendet werden

In einer weiteren Ausführungsform der Erfindung enthält die Zusammensetzung zusätzlich mindestens ein Diamin und/oder Diol.

Als Diamine, welche für die Kettenverlängerung eingesetzt werden, sind 2-Methylpropyl-3,5-diamino-4-chlorobenzoat, Bis-(4,4'-amino-3-chlorophenyl)-methan, 3,5-Dimethylthio-2,4-toluylendiamin, 3,5-Dimethylthio-2,4-toluylendiamin, 3,5-Diethyl-2,4-toluylendiamin, 3,5-Diethyl-2,6-toluylendiamin, 4,4'-Methylen-bis-(3-chloro-2,6-diethylanilin) und 1,3-Propandiol-bis(4-aminobenzoat) bevorzugt.

Als Diole sind Butandiol, Neopentylglykol, Hexandiol, Propylenglykol, Dipropylenglykol, Diethylenglykol und/oder Cyclohexandimethanol bevorzugt.

Bei den im Sinne der Erfindung zur Kettenverlängerung eingesetzten Diaminen oder Diolen handelt es sich um handelsübliche Verbindungen, die bei der Firma Lanxess Deutschland GmbH unter dem Handelsnamen Addolink^{®} erhältlich sind.

Als Katalysatoren werden vorzugsweise Dibutylzinndilaurate oder Triethylendiamin in Dipropylenglycol eingesetzt.

Als Katalysatoren können handelsübliche Verbindungen, Z.B. die unter dem Handelsnamen Addocat^{®} vertriebenen Produkte der Firma Rheinchemie Rheinau GmbH verwendet werden.

Bevorzugt wird das erfindungsgemäße aromatische polymere Carbodiimid nach Formel (I) in einer Menge von 0,1 bis 2 Gew.-%, besonders bevorzugt 0,5 bis 1,5 Gew.-%, meist bevorzugt 1,0 bis 1,5 Gew.-% bezogen auf die Gesamtmischung, eingesetzt.

Die nach diesem Verfahren hergestellten Polyurethan(PU)-basierten Systeme zeichnen sich durch eine exzellente Hydrolysestabilität aus.

Ein weiterer Gegenstand der vorliegenden Erfindung ist daher die Verwendung der erfindungsgemäßen aromatische polymeren Carbodiimide als Hydrolysestabilisator in Polyurethan enthaltenden Zusammensetzungen, vorzugsweise in thermoplastischem TPU, PU-Klebstoffen, PU-Gießharzen, PU-Elastomeren oder PU-Schäumen, sowie die dadurch erhaltenen Produkte.

Die nachfolgenden Beispiele dienen der Erläuterung der Erfindung, ohne dabei limitierend zu wirken.

### Allgemeine Herstellvorschrift für die Beispiele 1 - 9:

Es wurden 200 g monomeres Diisocyanat in einen 500 ml-Dreihalskolben eingewogen, der mit Innenthermometer, Rückflusskühler und Schutzgaseinlass ausgestattet war, und daraufhin wurden für die Beispiele 1 bis 7 gemäß den oben angegeben Anteile (CDI 1 - 7, Angaben Gewicht-bezogen auf das Diisocyanat) des jeweiligen Katalysatoren zugesetzt. In der Aufheizphase gab man einen leichten Argonstrom über die Dampfphase. Bei beginnender CO₂-Entwicklung wurde das Schutzgas abgestellt. Die Carbodiimidisierung wurde bei 180 °C unter Rühren so lange fortgeführt, bis ein NCO-Gehalt von ca. 12 Gew.% erreicht wurde. Nach Abdestillation des restlichen monomeren Diisocyanats und der flüssigen Katalysatoren bei 180 °C unter Vakuum wurde die Temperatur auf ca. 120°C gesenkt und die restlichen freien NCO-Gruppen der polymeren Carbodiimiden wurden mit Methylpolyetheralkohol (MPEG) endfunktionalisiert (endgekappt). Gegebenenfalls enthaltene feste Katalysatoren (Cs-Carbonat) wurden mittels Filtration entfernt.
- **Beispiel 1:**: Herstellung eines aliphatischen polymeren Carbodiimids durch Umsetzung von 1,3-Bis(2-isocyanato-2-propyl)benzol (TMXDI) mit 0,2 Gew.% 1-Methyl-1-oxo-3-phospholen (MPO) (Vergleich).
- **Beispiel 2:**: Herstellung eines aromatischen polymeren Carbodiimids durch Umsetzung durch Umsetzung der Verbindung der Formel (IV) mit 0,5 Gew.% Kalium-Methanolat (Vergleich).
- **Beispiel 3:**: Herstellung eines aliphatisches polymeren Carbodiimids durch Umsetzung durch Umsetzung der Verbindung vom TMXDI mit 0,5 Gew.% Kalium-Methanolat (Vergleich).
- **Beispiel 4:**: Herstellung eines aromatischen polymeren Carbodiimids durch Umsetzung durch Umsetzung der Verbindung der Formel (IV) mit 3 Gew.% Cs-Carbonat (Vergleich).
- **Beispiel 5:**: Herstellung eines aliphatisches polymeren Carbodiimids durch Umsetzung durch Umsetzung der Verbindung vom TMXDI mit 3 Gew.% Cs-Carbonat (Vergleich).
- **Beispiel** 6:: Herstellung eines aromatischen polymeren Carbodiimids durch Umsetzung der Verbindung der Formel (IV) mit 0,2 Gew.% (MPO) bezogen auf das Diisocyanat (Vergleich).
- **Beispiel** 7:: Herstellung eines aromatischen polymeren Carbodiimids durch Umsetzung der Verbindung der Formel (IV) mit 20 ppm (0,002 Gew.%) MPO bezogen auf das Diisocyanat (erfindungsgemäß).
- **Beispiel** 8:: Herstellung eines aromatischen polymeren Carbodiimids durch Umsetzung der Verbindung der Formel (IV) mit 30 ppm (0,003 Gew.%) MPO bezogen auf das Diisocyanat (erfindungsgemäß).
- **Beispiel** 9:: Herstellung eines aromatischen polymeren Carbodiimids durch Umsetzung der Verbindung der Formel (IV) mit 50 ppm (0,005 Gew.%) MPO bezogen auf das Diisocyanat (Vergleich).

### Bestimmung der Farbe

Die Farbbestimmung wurde nach der CIE L*a*b*-Methode gemäß ISO 11664-4 durchgeführt. Bewertet wurde der b*-Wert.

### PU-Reaktivitätstest auf störende Nebeneffekte

Reste von katalytischen Phosphorverbindungen stören erheblich die Herstellung von Polyurethanen und haben einen negativen Einfluss auf deren Qualität.

1 Teil Polycarbodiimid und 9 Teile 4,4'-Methylen-di(phenylisocyanat) (MDI) wurden in einen 250 ml Vierhalskolben vorlegt. Anschließend wurde mit Stickstoff inertisiert. Anschließend wurde die Mischung auf 80 °C erwärmt und gerührt. Es wurde geprüft, ob die Mischung schäumt bzw. ob Gasentwicklung erfolgt. Nach 24 Stunden wurde zusätzlich an der Endprobe beurteilt, ob die Viskosität angestiegen war.

Die Eigenschaften der in Beispiel 1 bis 7 erhaltenen polymeren Carbodiimide sind in Tabelle 1 wiedergegeben:

**Tabelle 1: Farbzahlen und PU-Reaktivitätstest**

| **Beispiel** | Carbodiimid | Einmalige Destillation / Filtration | |
|---|---|---|---|
| | | Farbe, CieLab (b-Wert) | PU-Reaktivitätstest |
| 1 | **CDI** 1 **(Vgl.)** | < 20 | Gasentwicklung, Viskositätsanstieg |
| 2 | **CDI** 2 **(Vgl.)** | > 100 | Kein negativer Effekt |
| **3** | **CDI** 3 **(Vgl.)** | > 100 | Kein negativer Effekt |
| 4 | **CDI** 4 **(Vgl.)** | > 100 | Kein negativer Effekt |
| 5 | **CDI** 5 **(Vgl.)** | > 100 | Kein negativer Effekt |
| **6** | **CDI** 6 **(Vgl.)** | < 10 | Gasentwicklung, Fest |
| 7 | **CDI** 7 (Erf.) | < 10 | Kein negativer Effekt |
| 8 | **CDI** 8 (Erf.) | < 10 | Kein negativer Effekt |
| **9** | **CDI** 9 **(Vgl.)** | < 10 | Gasentwicklung, Viskositätsanstieg |

| | | | |
|---|---|---|---|
| Vgl. = Vergleichsbeispiel; Erf. = erfindungsgemäß | | | |

Die Ergebnisse belegen, dass mit dem erfindungsgemäßen Verfahren polymere aromatische Carbodiimide mit sehr niedriger Farbzahl hergestellt werden können. Die Verwendung von basischen Katalysatoren führt zu dunklen Carbodiimiden.

Weiterhin treten durch die Verwendung des erfindungsgemäßen aromatischen polymeren Carbodiimids keine störende Nebeneffekte im PU-Reaktivitätstest auf, ganz im Gegensatz zu dem unter Verwendung eines größeren Gehalts an Phosphor-haltigem Katalysator erhaltenen Produkt in (Vergleichs-)Beispiel 6, welches ohne zusätzliche Destillation(en) nicht für die Verwendung in den meisten PU-Anwendungen geeignet ist.

### Versuche zur Umsetzung von aromatischen und aliphatischen Diisocyanaten

Dazu wurde die Abnahme des Isocyanat-Gehaltes nach 24 bei 180 °C unter Verwendung von 0,002 Gew.% (in den Beispielen 10, 11, und 13) bzw. 0,001 Gew.% (in Beispiel 12) 1-Methyl-1-oxo-phospholen (Menge MPO bezogen auf das Diisocyanat) dargestellt. Es zeigte sich bei diesen Untersuchungen, dass das aliphatische Diisocyanat in Gegenwart von 0,002 Gew.% Phosphor-haltigem Katalysator und das aromatische Diisocyanat in Gegenwart von 0,001 Gew.% Katalysator nicht carbodiimidisiert werden können. Das erfindungsgemäße Verfahren eignet sich somit nur für die Herstellung von aromatischen polymeren Carbodiimiden mittels der angegebenen Katalysatoremenge. Auch unter Anwendung der in EP 2897996 B1 beschriebenen Reaktionsbedingungen (300 mbar Druck, Stickstoff-Strom 10l/h) konnte kein Isocyanat zu Carbodiimid umgesetzt werden (Beispiel 11).

### Bestimmung des NCO-Gehaltes

Der NCO-Gehalt wurde mittels potentiometrischer Titration in bestimmt. Die Bestimmung beruht auf der Reaktion eines Isocyanates (aliphatisch oder aromatisch) mit einem primären oder sekundären Amin zum entsprechenden Harnstoffderivat und anschließender Rücktitration der überschüssigen Aminlösung mit Salzsäure.

Dafür wird die vorgelegte Probe mit einem Überschuss an Reagenzlösung (0,1 N Lösung von Dibutylamin in Toluol) versetzt. Abschließend wird die bei dieser Prozedur nicht verbrauchte Menge an Reagenz durch Rücktitration mit einer anderen, geeigneten Titerlösung (0,1 N isopropanolische Salzsäurelösung) bestimmt.

Die Ergebnisse der Messungen sind in der Tabelle 2 dagestellt:

**Tabelle 2:**

| Beispiel | Isocyanat | NCO-Gehalt (Gew.%) | |
|---|---|---|---|
| | | Ausgangswert | nach 24 h, 180°C |
| 10 (Vgl.) | TMXDI | 33,3 | 33,1 |
| 11 (Vgl.) | TMXDI | 33,2 | 33,1 |
| 12 (Vgl.) | TRIDI | 28,5 | 28,0 |
| 13 (Erf.) | TRIDI | 28,2 | 12 |

| | | | |
|---|---|---|---|
| Vgl. = Vergleichsbeispiel; Erf. = erfindungsgemäß | | | |

## Patentansprüche

1. Verfahren zur Herstellung von polymeren aromatischen Carbodiimiden der Formel (I)
R⁴-R⁸-(-N=C=N-R⁸-)ₘ-R⁴ (I),
wobei
m einer ganzen Zahl von 2 bis 500, bevorzugt 3 bis 20, ganz besonders bevorzugt 4 bis 10 entspricht,
R⁸ für C₁-C₁₂-Alkyl- substituierte Arylene, C₇-C₁₈-Alkylaryl-substituierte Arylene oder C₁-C₁₂-Alkyl- substituierte über Alkylengruppen verbrückte Arylene steht, wobei alle genannten Arylene jeweils mit mindestens 2 der vorgenannten Alkyl- und/oder Alkylarylresten substituiert sind, unter der Maßgabe, dass R⁸ insgesamt 9 bis 30 Kohlenstoffatome aufweist, und
R⁴ -NCO, -NCNR⁵, -NHCONHR⁵, -NHCONR⁵R⁶ oder -NHCOOR⁷ ist,
wobei R⁵ und R⁶ gleich oder verschieden sind und einen C₁-C₁₂-Alkyl-, C₆-C₁₂-Cycloalkyl-, C₇-C₁₈-Aralkyl- oder Arylrest darstellen und R⁷ einem C₁-C₂₂-Alkyl-, C₆-C₁₂-Cycloalkyl-, C₆-C₁₈-Aryl- oder C₇-C₁₈-Aralkylrest, einem ungesättigten C₂-C₂₂-Alkylrest oder einem Alkoxypolyoxyalkylenrest entspricht,
durch Carbodiimidisierung aromatischer Diisocyanate bei Temperaturen von 120 bis 220° C, vorzugsweise von 160 bis 200°C in Gegenwart mindestens eines Phosphor-haltigen Katalysators in einer Konzentration von 15 - 40 ppm, bevorzugt von 20 - 30 ppm, massenbezogen auf den Gehalt an aromatischen Diisocyanaten, wobei der Phosphor-haltige Katalysator ausgewählt ist aus Phospholenen und Phospholidinen.

2. Verfahren gemäß Anspruch 1, wobei die Alkylsubstituenten pro Gruppe R⁸ in Summe von 3 bis 24 Kohlenstoffatome aufweisen, bevorzugt in Summe von 4 bis 24 Kohlenstoffatome unter der Maßgabe, dass R⁸ insgesamt 10 bis 30 Kohlenstoffatome aufweist und meist bevorzugt in Summe von 6 bis 18 Kohlenstoffatome, unter der Maßgabe, dass R⁸ insgesamt 12 bis 30 Kohlenstoffatome aufweist.

3. Verfahren gemäß Anspruch 1 oder 2, wobei R⁸ für C₁-C₁₂-Alkyl- substituierte Arylene steht, welche mit mindestens 2 C₁-C₁₂-Alkylresten substituiert sind, unter der Maßgabe, dass R⁸ insgesamt 10 bis 24 Kohlenstoffatome aufweist.

4. Verfahren gemäß einem oder mehreren der Ansprüche 1 bis 3, wobei R⁸ für Diisopropylphenylen und/oder Triisopropylphenylen steht.

5. Verfahren gemäß einem oder mehreren der Ansprüche 1 bis 3, wobei die polymeren aromatische Carbodiimide der Formel (II) entsprechen 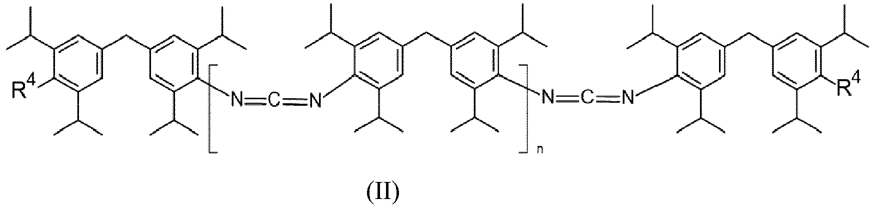 wobei R⁴ die obige Bedeutung hat und n = 1 bis 20, bevorzugt n = 1 bis 15 ist.

6. Verfahren gemäß einem oder mehreren der Ansprüche 1 bis 5,.

7. Verfahren gemäß einem oder mehreren der Ansprüche 1 bis 5, wobei der Phosphor-haltige Katalysator ausgewählt ist aus Phospholenen und Phospholinen, bevorzugt aus Phospholenoxiden und Phospholinoxiden, und besonders bevorzugt aus Alkylphospholenoxiden wie z. B. Methylphospholenoxiden.

8. Verfahren gemäß einem oder mehreren der Ansprüche 1 bis 7, wobei der Phosphor-haltige Katalysator ausgewählt ist aus Verbindungen der allgemeinen Formel (1) oder Doppelbindungsisomeren davon, 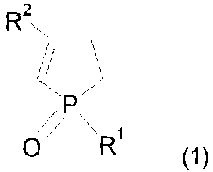 wobei R¹ und R² unabhängig voneinander für H oder einen aliphatischen C₁-C₁₅-Kohlenwasserstoffrest, cycloaliphatischen C₅-C₁₅-Kohlenwasserstoffrest, Aryl-C₆-C₁₅-Kohlenwasserstoffrest, Aralkyl-C₆-C₁₅-Kohlenwasserstoffrest oder Alkaryl-C₆-C₁₅-Kohlenwasserstoffrest, stehen.

9. Verfahren gemäß Anspruch 8, wobei R¹ in der Formel (1) für H oder einen aliphatischen C₁-C₁₀-Kohlenwasserstoffrest oder einen Aryl-C₆-C₁₅-Kohlenwasserstoffrest und R² in der Formel (1) für H oder einen aliphatischen C₁-C₁₀-Kohlenwasserstoffrest steht.

10. Verfahren gemäß Anspruch 8 oder 9, wobei R¹ in der Formel (1) für einen Methyl-, Ethyl- oder Propylrest oder einen Phenyl- oder Benzylrest und R² in der Formel (1) für H, oder einen Methyl-, Ethyl- oder Propylrest steht.

11. Verfahren gemäß einem oder mehreren der Ansprüche 8 bis 10, wobei R¹ in der Formel (1) für einen Methyl- oder Phenylrest und R² in der Formel (1) für H oder einen Methylrest steht.

12. Verfahren gemäß einem oder mehreren der Ansprüche 1 bis 11, wobei als Carbodiimidisierungskatalysator 1-Methyl-2-phospholen-1-oxid und/oder dessen Doppelbindungsisomer 1-Methyl-3-phospholen-1-oxid eingesetzt wird.

13. Polymere aromatische Carbodiimide der Formel (I) gemäß einem oder mehreren der Ansprüche 1 bis 5 mit einer Farbzahl von weniger als 50, vorzugsweise weniger als 35, besonders bevorzugt weniger als 25 und meist bevorzugt weniger als 15, ermittelt als b-Wert nach der CIE L*a*b*-Methode gemäß ISO 11664-4 und einem Gehalt von maximal 10 ppm, bevorzugt maximal 5 ppm und besonders bevorzugt maximal 1 ppm an Phosphor-haltigen Katalysatoren gemäß einem oder mehreren der Ansprüche 6 bis 12.

14. Verwendung der polymeren aromatischen Carbodiimide gemäß Anspruch 13 als Hydrolysestabilisatoren für Polyurethan enthaltende Zusammensetzungen, bevorzugt thermoplastischem TPU, PU-Klebstoffen, PU-Gießharzen, PU-Elastomeren oder PU-Schäumen.

15. Polyurethan enthaltende Zusammensetzungen, bevorzugt thermoplastisches TPU, PU-Klebstoffe, PU-Gießharze, PU-Elastomere oder PU-Schäume enthaltend polymere aromatische Carbodiimide gemäß Anspruch 13.
